# EUROPEAN PATENT APPLICATION

(11) **EP 0 580 344 A2**
(43) Date of publication of application: **26.01.1994**
(21) Application number: 93305479.3
(22) Date of filing: 13.07.1993
(51) Int. Cl.: G05D 23/00

(54) **Process for detecting and dampening oscillatory reactive behavior**

(30) Priority: 20.07.1992 US 915218
(71) Applicant: THE DOW CHEMICAL COMPANY, Midland, Michigan 48640 (US)
(72) Inventor: West, David H., Baton Rouge, Louisiana 70815 (US); Herbert, Lawrence A., Baton Rouge, Louisiana 70809 (US)
(74) Representative: Raynor, John

(57) **Abstract**

A process for detecting and counteracting incipient oscillatory reactive behavior in certain exothermic, self-catalyzed reactive processes, comprising the steps of continuously measuring a reaction parameter having the capacity to function as an indicator of oscillatory reactive behavior in the process for a time sufficient to determine the presence or absence of such oscillatory behavior, and if such behavior is detected, then iteratively (i) comparing the intensity of an oscillation in such parameter to a preset value to determine whether or not counteractive measures are required to return the parameter to an acceptable and stable level, (ii) changing a set point of the reactive process responsive to the intensity of an oscillation in the parameter equalling or exceeding the preset value, and (iii) measuring the parameter after changing said set point until the intensities of oscillations in such parameter are less than the preset value.

## Description

The present invention relates in one aspect to certain exothermic, self-catalyzing reactions and to the detection and counteracting of incipient oscillatory behavior therein. More particularly, the present invention relates to the commercial high temperature, vapor phase chlorination processes for making chloromethanes and other chlorinated hydrocarbon derivatives, and to the detection and counteracting of incipient oscillatory behavior in such processes.

As is well known in the thermal chlorination art, proper operation of the near-adiabatic, commercial vapor-phase thermal chlorination reactors requires mixing hot product gases with incoming (cold) feed gases, so that the chlorination of incoming hydrocarbon reactants is initiated and propagated. Typically this mixing is done internally via a sudden expansion-type configuration of the reactor, whereby product gases are recirculated back toward the reactor inlet and entrained in the expanding stream of reactant gases. "Hydrocarbon", it should be noted, embraces chlorinated hydrocarbons which may be further chlorinated, as well as non-chlorinated hydrocarbons.

Thermal chlorination reactors of the type described above are capable of operating over a wide range of reactant flowrates, temperatures and pressures, but at higher reactant flowrates and under certain operating conditions (set points) the reaction begins to proceed in an oscillatory fashion. These oscillations can become unstable with relatively minor changes in the reactor's operating conditions, and can grow in intensity until the rate of heat production by reaction is exceeded by the rate of heat removal by convection, and the chlorination reaction is quenched. As a consequence, the production rates of chloromethanes and chlorinated derivatives from a reactor are limited.

Furthermore, immediately after quenching the reactor is unstable to even the most minor perturbation, because the reactor is left filled with a substantial inventory of unreacted material at an elevated temperature. Minor changes in operating conditions can ignite the unreacted material inside the reactor, causing a violent explosion. The sort of incipient oscillatory behavior described herein can thus easily end up posing a safety risk as well.

Given this background, there is a significant need for a process whereby incipient oscillatory behavior may be detected and dampened or otherwise effectively counteracted, for example before the chlorination reaction in a given reactor may be quenched. The present invention meets this need, and provides a process and associated apparatus for detecting and dampening or counteracting oscillatory reactive behavior in those exothermic, self-catalyzed reactive processes which operate without a substantial degree of external cooling, with commercial processes for high temperature, vapor phase chlorination being a preferred context in which to employ the process of the present invention.

A significant part of the present invention lies in the discovery that oscillatory reactive behavior can and does occur in commercial chlorination reactors. Oscillatory reactive behavior has in one instance been measured and modeled for chlorination reactions carried out on a laboratory scale in a continuous stirred tank reactor (as opposed to a typical jet-stirred chlorination reactor) with substantial external cooling (to the point of operating nearly isothermally), see Bush, "The Measurement and Prediction of Sustained Temperature Oscillations in a Chemical Reactor", Proc. Roy. Soc. A., vol. 309, pp 1-26 (18 Feb. 1969), but commercial chlorination is again more nearly adiabatic than isothermal. Given particularly that quenching behaviors in such commercial processes are a function of the interrelationship between the rate of heat production by reaction and the rate of heat removal by convection, this is a very significant distinction.

Reactive oscillations of the type described and dealt with herein have more commonly been known to occur in other contexts, for example, in combustion systems such as rocket engines, jet engine afterburners, powerplants, etc., and in a few exothermic, catalytic reactions, for example the catalytic oxidation of carbon monoxide, catalytic hydrogenation, and cool flame oxidation of acid anhydrides. Only very recently, however, have methods of active instability control been developed and these have been directed to reducing noise levels from combustors, see, for example, Poinsot et al., "Suppression of Combustion Instabilities by Active Control", J. Propulsion, Vol. 5, No. 1, pp. 14-20 (1989) and the references cited therein.

By the process of the present invention, incipient oscillatory behavior in a given exothermic, self-catalyzed reaction is simply and conventionally detected by means, for example, of a strain gauge or other pressure measuring device for detecting pressure oscillations and which has at least electronic analog communication capabilities, and the magnitude or intensity of a detected oscillation in a given parameter (such as pressure) is compared to a preset, limiting value in a conventional control device or apparatus. If the intensity of the oscillations exceeds this preset value, then in one embodiment a set point of the reaction is proportionally adjusted so as to reduce the measured property and the oscillations therein to acceptable values through one or more iterations. In a second embodiment, reactor feed flow is modulated by feeding back the properly phase-shifted and amplified time-derivative of the measured oscillations to a feed flow controller.

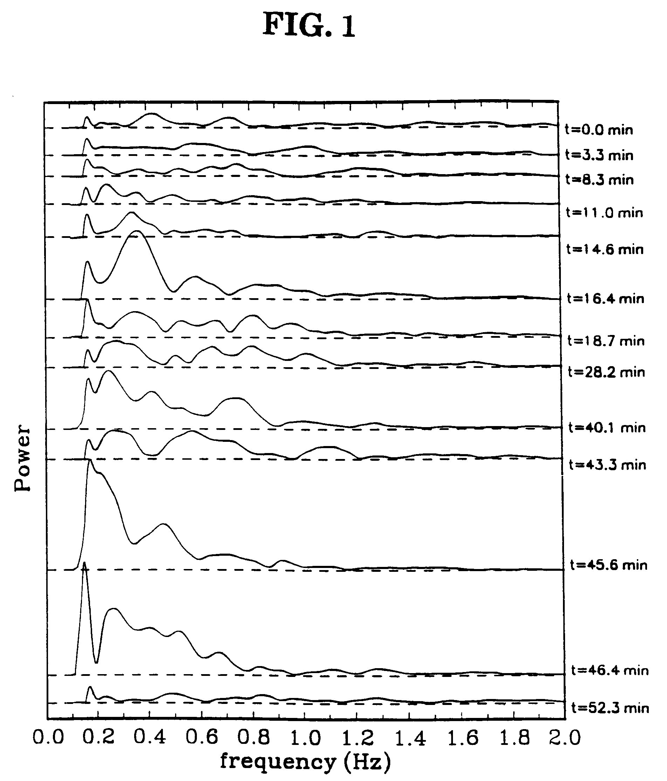

Figures 1-3 are frequency domain plots of the pressure fluctuations measured at various times in the course of Examples 1-3, respectively, responsive to set point changes in the reaction systems of these Examples.

As has been previously indicated, a preferred application of the teachings of the present invention is for detecting and dampening or otherwise counteracting incipient oscillatory behavior in a commercial thermal chlorination reactor, for example a sudden expansion-type thermal chlorination reactor.

The means provided for detecting incipient oscillatory behavior in such a reactor preferably simply comprises a high-speed strain gauge placed in fluid communication with the reactor. The strain gauge continuously measures the pressure in the reactor over a period of time to determine whether or not the reaction pressure is oscillating, and preferably provides a current signal in the time domain of the reactor's pressure. If the pressure is oscillating, then the amplitudes of fast Fourier transforms of these corresponding time domain pressure signals are compared to a preset value, such preset value preferably having been selected to provide a suitable margin of operating safety whereby the reaction does not become unstable with only minor perturbations in operating conditions.

If this preset value is not exceeded, then no corrective action is immediately required, although on subsequent cycles corrective action may be called for. If the preset value is exceeded, then in one embodiment a conventional feed flow control means (which may be any known control means for accomplishing this function) proportionally increases the amount of the limiting chlorine reagent in the feed relative to the hydrocarbon reagent, whereby the reaction is increased. The response of the system to this set point change is measured via the strain gauge, and a comparison is again made to the preset value to determine if further set point adjustment is required. This iterative process is continued thereafter until acceptable, stable reaction pressures are restored.

In a second embodiment, if the preset value is exceeded, then the time-derivative of the measured pressure oscillations is phase-shifted and amplified, then fed back into the feed flow control means. The feed flow control means modulates the reactor feed flow accordingly, for example by oscillation of a butterfly valve across a premixed feed line carrying the chlorine and hydrocarbon reactants, and incipient oscillatory behavior is dampened out by alternately reducing feed flow to the reactor when reactor pressure is on the upswing and restoring or increasing feed flow when reactor pressure is on the downswing in its measured cycle.

In practice, this process preferably involves using a high-speed strain gauge to measure and track oscillations in the pressure inside the reactor, digitizing the pressure signal from the strain gauge, and then transforming this signal from time domain to frequency domain through a fast Fourier transform or FFT. Through an accumulation of multiple transforms, extraneous frequencies arising from hydrodynamic instabilities, turbulence, electrical noise, and the like may be filtered out and those frequencies corresponding to kinetic oscillations can be extracted and amplified. Alternately, the extraneous frequencies can be individually conventionally identified and thereafter ignored, or the frequency range of interest can be predicted in advance as by a computer modeling of the particular reaction system.

The processed transform is then phase-shifted by an amount which is determined experimentally through trialand-error for a given system (so that oscillations are dampened rather than reinforced), and inverted back to the time domain. The signal is multiplied by a gain factor and then transmitted to the feed flow control means.

It is presently anticipated that with the proper phase angle and frequency, feeding back as little as 0.1 percent of the observed oscillation completely suppresses the incipient oscillatory behavior, in many cases, within a few minutes. Higher gains may suppress the behavior within a few cycles. The operations involved in the above-described process are preferably performed through a computer, and when performed properly provide an effective means for dampening out incipient oscillatory behavior before quenching of the reaction becomes an undue risk.

It will be appreciated that other reaction parameters besides pressure could conceivably be taken as indicators of oscillatory reactive behavior as well, and could be measured against preset control values by known means and techniques. It is only necessary that the associated means for measuring a given parameter have a response time at least as fast as the signal which is indicative of incipient instability and which is to be measured.

The present invention is further illustrated by means of the following examples, which are directed to a conventional exothermic, self-catalyzed, vapor-phase thermal chlorination process using chlorinated hydrocarbons as the organic feed (and specifically methylene chloride and methyl chloride in varying ratios) and molecular chlorine as the chlorinating agent.

Chlorine was conventionally used as the limiting reagent and was essentially reacted to complete conversion, with feed concentrations in the range of from about 21 to about 25 mole percent of the total feed.

The reactor operated in a near-adiabatic mode and was of a conventional sudden-expansion or jet-stirred type. Reaction conditions were 0.22 N/m² (gauge) (32 pounds per square inch (gauge)), feed temperatures of 55 degrees Celsius, exit temperatures of from about 460 to 475 degrees Celsius, and residence times of about 7 seconds.

A commercially-available pressure transmitter (of the aforementioned high-speed strain gauge variety) (Rosemount, Inc.) mounted on the entrance head of the reactor was used to monitor pressure fluctuations in the reactor over the course of the experiments described more particularly below. The transmitter was connected to a dynamic signal analyzer (Hewlett-Packard Company) which had the capability of presenting the pressure transmitter signal in both time and frequency domains. The frequency domain graph was accomplished by performing a fast Fourier transform (FFT) on the time signal by a high speed computer, thereby allowing real time representations of pressure fluctuations in both the time and frequency domains. The examples herein are all presented in the frequency domain as best illustrating the process of the present invention.

A typical example consisted of inducing the reactor into an unstable, oscillatory mode of operation by a reduction in the chlorine feed concentration, thereby lowering the outlet temperature of the reactor. This reduction in the chlorine feed concentration was achieved by either increasing the flowrate of methyl chloride to the reactor while keeping the chlorine flowrate constant, or by decreasing the flowrate of chlorine while keeping the methyl chloride flowrate constant. In all examples, the methylene chloride flowrate was kept constant throughout. The reactor outlet temperature was lowered enough by this course of action so that the intensity of the pressure fluctuations would in time lead to the reaction being quenched, unless corrective actions were taken.

### Example 1

In this example, the methyl chloride flowrate was held constant, and the chlorine flowrate was lowered such that the chlorine concentration in the feed decreased a total of 1.5 mole percent from its starting, stable reaction value. This decrease in chlorine feed concentration corresponded to an exit temperature change from 472 degrees Celsius initially to a low value of 460 degrees Celsius. The methylene chloride concentration was held constant at 35 mole percent of the organic feed. The residence time increased slightly from 6.8 seconds to 7.0 seconds because of the flow changes. The frequency domain plot of the measured pressure fluctuations at various times is provided in Figure 1.

### Example 2

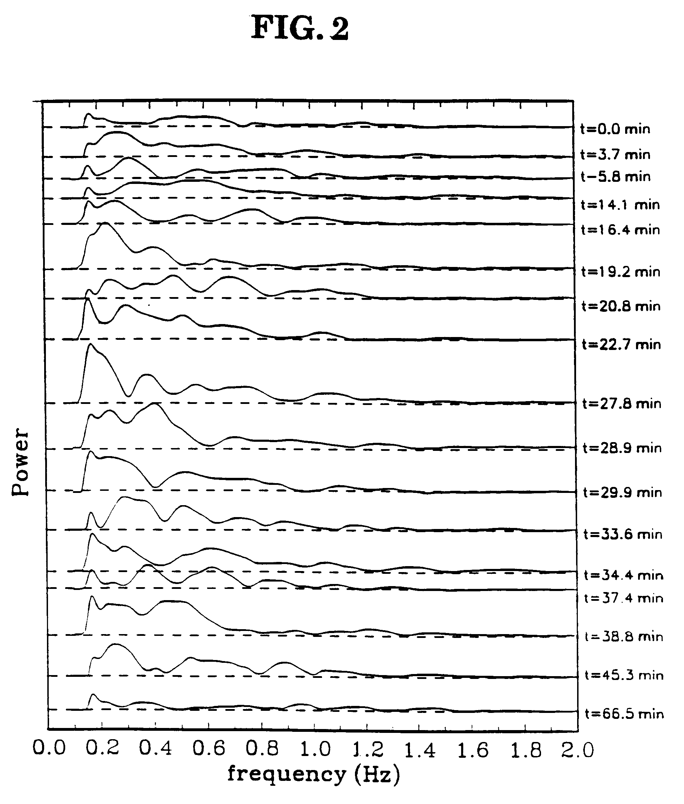

The methylene chloride concentration for this example was changed from a constant 35 percent to a constant 28 mole percent of the organic, chlorinated hydrocarbon feed. Whereas in Example 1 the chlorine concentration in the feed was changed while the methyl chloride concentration was held constant, here the chlorine flowrate in the feed was held constant and the methyl chloride flowrate increased so that the chlorine concentration in the feed was decreased by a total of 1.2 mole percent from its initial, stable reaction value. This decrease corresponded to an exit temperature change from 472 degrees Celsius initially to a low value of 464 degrees Celsius. Residence times decreased slightly from 7.0 to 6.9 seconds. The frequency domain plot of the resultant pressure fluctuations is given in Fig. 2.

### Example 3

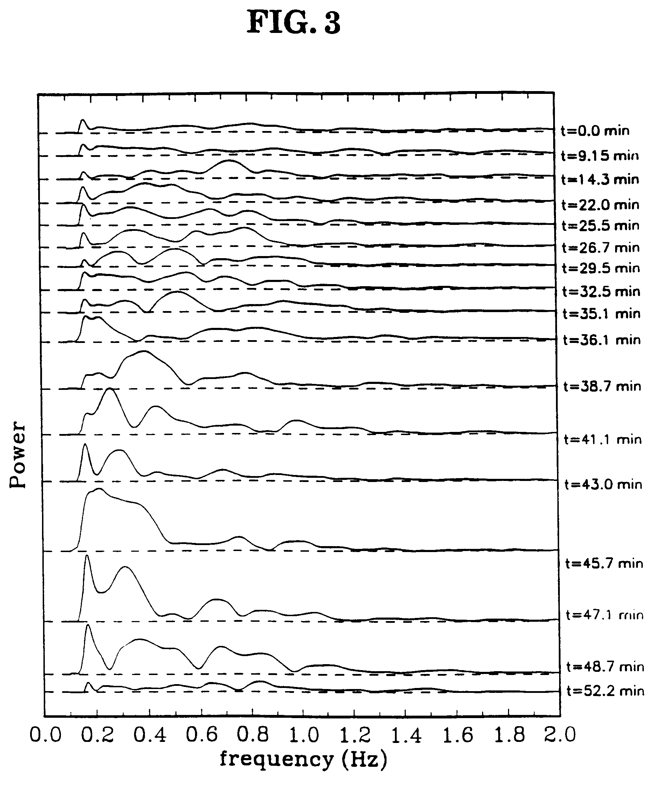

For this example, the chlorine feed concentration was decreased by 1.3 mole percent from its initial value by lowering the chlorine flowrate, while holding the methyl chloride flowrate steady. The exit temperature of the reactor was lowered from 475 degrees initially to a low of 463 degrees. Residence times ranged from a low of 6.8 seconds to a high of 7.0 seconds. The frequency domain plot for the pressure fluctuations measured in this example is provided in Fig. 3.

In each of Figures 1-3, a series of graphs are provided which correspond to particular points in time over the course of an experiment, following a change in the chlorine concentration in the feed. The time t=0 graph corresponds to the beginning of each experimental run when the reactor was operating in a stable manner with slight to negligible pressure fluctuations. The final graph in each of Figures 1-3 corresponds to the reestablishment of stable operation by an increase in the outlet temperature.

What is apparent in each Figure as time progresses is an increase in intensity of the pressure fluctuations after a given set point change, and particularly at frequencies below 1 Hz, as indicated by the large increase in the ordinate values of the individual graphs in a given Figure. Other observations may be made as well. A comparison of Figure 1 to Figures 2 and 3 shows little sensitivity to changes in the methylene chloride feed concentration, at least over the range studied. The similarity between Figures 2 and 3 demonstrates also an apparent insensitivity to the manner employed for changing the set point, i.e., for lowering the reactor's exit temperature. These observations collectively suggest that the process described and exemplified herein for detecting incipient oscillatory instabilities in a conventional sudden-expansion type, vapor-phase thermal chlorination reactor should be useful for a variety of conditions and manners of operation, and further that certain frequency bands are associated with the unstable oscillatory behavior in a given reaction system.

The particular frequency bands that may become excited or unstable as a reaction set point is changed are considered to be a result of the complex interaction of the changing temperature field in the reactor and its effect on the reaction rates of a particular reaction system. It is noted that there are often many elementary reaction steps in an overall reaction sequence of a given system, and each of these steps have varying activation energies. It is this spectrum of activation energies in the many elementary reactions that gives rise to a band of frequencies that exhibit excitability, as opposed to the single frequency which would be associated with a single step system.

It is also clear that other reaction systems utilizing different feed materials or operating at different temperature levels would not necessarily be expected to exhibit the same frequency band width observed in these examples. Rather, the frequency bands expected to be observed would be characteristic of the particular reaction system and of its operating conditions.

These bands can be diagnosed by an examination of strip charts or other records leading to a previous incidence of instability, by computer modeling of the particular reaction system, or simply by forcing instability in the system, shutting off the flow of reactants to the system while keeping pressure, flow and other possible causes of mechanically-induced vibrations constant, and then using a mechanical vibration monitor to isolate and identify the frequencies of these other, extraneous vibrations.

While preferred embodiments of the process and apparatus of the present invention have been particularly described and illustrated herein, those skilled in the art will readily appreciate that numerous modifications may be made to these embodiments without truly departing in scope or spirit from the present invention, as that invention has been defined in the claims below.

## Claims

1. A process for detecting and counteracting incipient oscillatory reactive behaviour in an exothermic, self-catalyzed reactive process operating without substantial external cooling, comprising the steps of:
continuously measuring a reaction parameter having the capacity to function as an indicator of oscillatory reactive behaviour in the process, for a time sufficient to determine the presence or absence of oscillatory behaviour therein, and if such behaviour is detected, then
altering a set point of the process in such a manner as to dampen the said oscillations.

2. A process as claimed in Claim 1, which process comprises iteratively
(i) comparing the intensity of an oscillation of the said parameter to a preset value to determine whether or not counteractive measures are required to return the parameter to an acceptable level;
(ii) changing the set point of the reactive process responsive to the intensity of the oscillation equalling or exceeding the preset value; and
(iii) measuring the parameter after changing said set point,
until the intensities of oscillations in the parameter are less than the preset value.

3. A process as claimed in Claim 1, which process comprises altering the said set point in response to variations in the time derivative of the said parameter.

4. A process as claimed in Claim 3, where the time derivative is phase-shifted and amplified.

5. A process as defined in any one of the preceding claims, wherein the step of altering a set point of the process comprises altering a premixed reactor feed flow to the process.

6. A process as defined in any one of the preceding claims, where in the step of altering a set point of the process comprises altering the proportion of reactants in the feed to the process.

7. A process as defined in Claim 6, wherein the process is a high temperature, vapor phase chlorination process and is conducted in a sudden-expansion type reactor apparatus; and
the ratio of chlorine to hydrocarbon reactants in the feed to such chlorination process is changed.

8. A process as defined in any one of the preceding claims, wherein the measured parameter is the reactor pressure.

9. A process as defined in Claim 8, wherein the reactor pressure is measured by means of a high speed strain gauge, and wherein the step of altering a set point of the process includes:
digitizing the signal from the strain gauge;
transforming the digitized signal from time domain to frequency domain via Fourier analysis;
filtering out extraneous frequencies not corresponding to oscillations in reactor pressure;
phase-shifting the filtered transform;
inverting the signal back to the time domain;
multiplying the signal by a gain factor; and
transmitting the thus-amplified and phase-shifted time derivative of the measured oscillations in reactor pressure to means for altering the set point according to the amplified and phase-shifted time derivative.
